(19) Europäisches Patentamt
European Patent Office
Office européen des brevets

(11) Numéro de publication: **0 047 200**
**A2**

(12) **DEMANDE DE BREVET EUROPEEN**

(21) Numéro de dépôt: **81401316.5**

(22) Date de dépôt: **18.08.81**

(51) Int. Cl.$^3$: **B 05 D 7/24**
B 05 D 3/06, E 01 F 9/04
E 01 F 9/08

(30) Priorité: **28.08.80 FR 8018682**

(43) Date de publication de la demande:
**10.03.82 Bulletin 82/10**

(84) Etats contractants désignés:
**BE CH DE GB IT LI NL**

(71) Demandeur: **COMMISSARIAT A L'ENERGIE ATOMIQUE**
**Etablissement de Caractère Scientifique Technique et Industriel**
**B.P. 510**
**F-75752 Paris Cedex 15(FR)**

(72) Inventeur: **Valiot, Catherine**
**10, rue Pasteur**
**F-60200 Compiegne(FR)**

(72) Inventeur: **Lemaire, Francis**
**5, rue Feltre**
**F-30200 Bagnols-sur-Ceze(FR)**

(72) Inventeur: **Gaussens, Gilbert**
**11, rue Jean Brunet**
**F-92190 Meudon(FR)**

(74) Mandataire: **Mongrédien, André et al,**
**c/o Brevatome 25, rue de Ponthieu**
**F-75008 Paris(FR)**

(54) **Procédé de mise en peinture d'un substrat et son application au marquage routier.**

(57) L'invention a pour objet un procédé de mise en peinture d'un substrat et son application au marquage routier.

Ce procédé consiste à appliquer sur un substrat une couche d'une peinture comportant un liant polymérisable à laquelle on ajoute, au moment de l'application, un peroxyde et éventuellement un sel métallique réducteur, et à soumettre ensuite la couche ainsi appliquée à une irradiation au moyen de rayonnements ultraviolets suivie éventuellement d'une irriadiation au moyen de rayonnements infrarouges.

EP 0 047 200 A2

L'invention a pour objet un procédé de mise en peinture d'un substrat, utilisable notamment pour le marquage routier.

Divers procédés connus sont utilisés à l'heure actuelle pour réaliser les marquages routiers, c'est-à-dire la mise en place des signalisations horizontales, notamment des bandes ou lignes continues et/ou discontinues de signalisation sur les revêtements des chaussées.

Tous ces procédés ont un inconvénient commun résidant en une immobilisation prolongée de la chaussée, qui entraîne :

- la perturbation du trafic avec des risques d'accidents ;
- une certaine lenteur dans la réalisation des chantiers ;
- un coût élevé en main-d'oeuvre du fait des hommes affectés au balisage de la chaussée ; et
- dans certains cas, l'obligation d'ouvrir la route à la circulation avant que le revêtement appliqué soit sec, d'où une salissure inévitable des bandes de signalisation.

De même, des procédés de mise en peinture rapide sont d'un grand intérêt pour la fabrication en chaîne d'éléments prépeints, destinés par exemple au Bâtiment.

L'invention a pour but surtout de remédier à l'inconvénient mentionné ci-dessus et propose un procédé du genre en question répondant mieux que ceux qui existent déjà aux diverses exigences de la pratique.

A cet effet, le procédé de mise en peinture d'un substrat selon l'invention se caractérise en ce que l'on applique sur ledit substrat une couche d'une peinture comportant un liant polymérisable contenant un photoinitiateur, à laquelle on ajoute au moment de l'application un peroxyde, et en ce que l'on soumet ensuite la couche de peinture ainsi appliquée à

une irradiation au moyen de rayonnements ultraviolets.

De préférence, selon l'invention on ajoute également à ladite peinture, un sel métallique réducteur au moment de l'application de la couche de peinture sur le substrat.

Avantageusement, on soumet la couche de peinture irradiée au moyen de rayonnements ultraviolets à une irradiation complémentaire au moyen de rayonnements infrarouges.

L'invention vise encore d'autres dispositions qui s'utilisent de préférence en même temps et dont il sera plus explicitement question dans ce qui suit. Elle pourra de toutes façons être bien comprise à l'aide du complément de description qui suit et des exemples donnés bien entendu à titre illustratif et non limitatif.

Pour réaliser un marquage routier conformément au procédé de l'invention, on s'y prend comme suit ou de façon équivalente.

On applique sur le revêtement de chaussée ou analogue une couche d'une peinture comportant un liant polymérisable à laquelle on a ajouté au moment de son application sur la chaussée un peroxyde et, éventuellement, un sel métallique réducteur, puis on soumet la couche de peinture ainsi appliquée à une irradiation au moyen de rayonnements ultraviolets, éventuellement suivie d'une irradiation au moyen de rayonnements infrarouges.

Le liant polymérisable entrant dans la constitution de la susdite peinture comporte :
- au moins un prépolymère réactif ;
- au moins un monomère insaturé ;
- au moins un monomère polyinsaturé ; et
- au moins un photoinitiateur.

En ce qui concerne le susdit prépolymère réactif qui entre pour environ 15 à 50 % en poids dans la constitution du liant, il peut être choisi parmi les résines :

- époxy-acrylate ;
- uréthane-acrylate ;
- polyesther-acrylate ;
- acryliques insaturées.

Le susdit monomère mono-insaturé est un produit comportant :

- soit une terminaison acrylate, par exemple un composé de formule :

$$CH_2 = CH - COOR$$

où R représente un radical hydrocarboné, tel que l'acide acrylique, l'acrylate de butyle, l'acrylate d'éthyle, l'acrylate d'éthylène glycol et autres ;

- soit une terminaison méthacrylate, par exemple un composé de formule $CH_2 = \underset{CH_3}{\underset{|}{C}} - COOR$, tel que l'acide méthacrylique, le méthacrylate de butyle, le méthacrylate d'éthyle, le méthacrylate d'éthylène glycol et autres ;

- soit une terminaison vinylique, par exemple un composé $CH_2 = CH - R$, tel que la vinyl-pyridine, la vinyl-pyrrolidone, le styrène et ses dérivés.

Les monomères mono-insaturés ou le mélange de monomères mono-insaturés représentent de 10 à 60 % en poids du liant.

Le susdit monomère polyinsaturé est un produit comportant deux ou plusieurs terminaisons acrylate et/ou méthacrylate et/ou vinylique, tel que :

- le diacrylate de diéthylène glycol ;
- le diacrylate de tétraéthylène glycol ;
- le diacrylate de polyéthylène glycol ;
- le diacrylate d'hexane diol ;
- le triacrylate de triméthylol propane ;

- le diméthacrylate d'éthylène glycol ;
- le triméthacrylate de triméthylol propane ;
- le tétraacrylate de pentaérythritol ;
- le divinyl-benzène.

Les monomères polyinsaturés ou le mélange de monomères polyinsaturés représentent de 5 à 50 % en poids du liant.

Le susdit photoinitiateur dont le rôle est d'absorber l'énergie des photons du rayonnement UV et de transmettre cette énergie aux divers constituants réactifs du mélange afin d'amorcer les réactions de polymérisation et de réticulation, est choisi parmi :

- les photoinitiateurs contenant un groupe carbonyle $-\underset{\underset{O}{\|}}{C}-$ comme par exemple la benzoïne et les éthers de la benzoïne, la benzophénone, les dérivés contenant un groupe carbonyle halogéné et analogues ;

- les photoinitiateurs sous forme de composés azotés comme par exemple l'azoéthane, l'$\alpha\alpha'$-azobisisobutyronitrile, l'azoxystyrène et autres ;

- les photoinitiateurs sous forme de composés sulfurés organiques comme par exemple de disulfure de diphényle, le dibenzothiazole, le benzodithiocarbamate, et autres ;

- les photoinitiateurs sous forme de composés halogénés comme les sulfochlorures de naphtalène, les sels métalliques halogénés et autres.

Ce photoinitiateur représente de 0,1 à 10 % et de préférence de 0,5 à 2 % en poids du liant polymérisable.

Le peroxyde que l'on incorpore à la peinture au moment de son application et grâce à la présence duquel se produit la polymérisation de la peinture sous l'influence des calories dissipées par le rayonnement UV peut être choisi dans le groupe comprenant :

- le peroxyde de 2-4 dichlorobenzoyle ;
- le peroxyde de lauroyle ;

- le peroxyde de benzoyle ;
- le peroxyde d'acétyl-cyclohexanesulfonyle ;
- le peroxyde d'isononanoyle 3-5-5 triméthyhexanoyle ;
- le peroxyde de dioctanoyle ;
- le peroxydicarbonate de cyclohexyle ;
- le peroxydicarbonate de 2 éthyl-hexyle ;
- le peroxydicarbonate de n-butyle ;
- le peroxydicarbonate de tertio-butyl-cyclohexyle ;
- le peroxydicarbonate d'iso-propyle ;
- le peroxyde de méthyl-éthylcétone ;
- le peroxyde de méthyl-isobutylcétone ; et
- le peroxyde de cyclohexanone.

Cette polymérisation se produit à l'abri de l'air, qui est un inhibiteur puissant des réactions radicalaires amorcées par le peroxyde, grâce à la présence d'une couche polymérisée superficielle qui se forme dès l'application de la couche de peinture sur le revêtement sous l'influence du rayonnement ultraviolet et du fait de la présence des photoinitiateurs.

Si la puissance thermique dissipée par l'irradiation ultraviolette n'est pas suffisante, il est possible de faire suivre cette irradiation par une irradiation infrarouge de plus forte puissance calorifique.

La quantité de peroxyde mis en oeuvre représente de 0,1 à 10, de préférence de 1 à 5 % en poids du liant.

Le sel métallique réducteur que, de préférence, on ajoute à la peinture au moment de sa mise en place sur le revêtement de chaussée, est un sel d'un acide minéral -notamment $H_2SO_4$ et HCL- ou organique -notamment acides acétique ou oxalique- et d'un métal qui sous sa forme ionique peut avoir plusieurs nombres d'oxydation.

Parmi ces métaux, on citera le fer, l'étain et le cérium.

Dans le cas d'un sel métallique apportant une coloration, on peut corriger celle-ci par le choix

judicieux des pigments et charges et de la concentration de ceux-ci.

La quantité de sel métallique mis en oeuvre représente de 0,1 à 10 %, de préférence de 0,5 à 3 % en poids du liant.

Certains sels métalliques n'étant pas directement solubles dans le liant, on les introduit sous forme de solutions aqueuses finement dispersées, la quantité d'eau nécessaire à cette dissolution pouvant alors représenter de 0,1 à 10 %, de préférence de 0,5 à 2 % en poids du liant.

Lors de la mise en présence du sel métallique et de peroxyde au moment de l'application de la couche de peinture, il se produit à la température ambiante, une réaction d'oxydo-réduction qui initie la polymérisation par réaction radicalaire.

Cette polymérisation se produit toujours à l'abri de l'oxygène de l'air du fait de la polymérisation instantanée d'une pellicule superficielle de la couche de peinture sous le rayonnement ultraviolet et grâce à la présence du photoinitiateur.

Dans la pratique, on applique des couches de peinture d'une épaisseur de 300 à 500 µm.

Outre le liant, le peroxyde et, de préférence, le sel métallique introduits au moment de l'application, la peinture comprend :

- des pigments, notamment le dioxyde de titane, en une quantité généralement de l'ordre de 5 à 30 % en poids à la masse totale ;

- des charges généralement choisies parmi les produits du groupe comprenant la silice, le carbonate de calcium, la kaolinite, le sulfate de baryte, l'amiante, les terres de diatomées et les charges thixotropiques, la quantité mise en oeuvre par rapport à la peinture étant généralement de 20 à 60 % en poids.

De plus, les couches de peinture de signalisation sont fréquemment rendues rétroréfléchissantes grâce à l'apport de billes de verre au moment de l'application.

Les billes de verre ont une granulométrie comprise entre 100 µm et 1mm, la quantité de billes pulvérisées représentant de 40 à 80 % du poids de peinture sèche déposée.

Ceci étant, pour l'application proprement dite de la couche de peinture constituant le marquage routier, on peut procéder comme suit.

On envisage tout d'abord le cas où l'on ajoute uniquement à la peinture un peroxyde et pas de sel métallique réducteur.

On constitue le liant, contenant le photoinitiateur, puis la peinture proprement dite, sans les billes de verre, et on dissout au dernier moment dans cette peinture la quantité nécessaire de peroxyde.

La mise en place de la couche de peinture constituant le marquage est effectuée par deux pulvérisations (pistolage) successives, la première déposant la peinture, la seconde les billes de verre.

Dès la fin de la seconde pulvérisation, la couche de peinture est irradiée par le rayonnement ultra-violet, celui-ci provoquant par l'intermédiaire du photoinitiateur, la polymérisation de la couche superficielle et par l'intermédiaire du peroxyde, la polymérisation complète ou partielle de la couche interne.

Si les essais préliminaires montrent que la polymérisation de la couche interne n'est que partielle, on fait suivre immédiatement l'irradiation ultraviolette d'une irradiation infrarouge qui permet par l'intermédiaire du peroxyde la polymérisation complète de la couche interne. Dès la fin de l'irradiation ultraviolette et éventuellement infrarouge, la peinture est

totalement polymérisée et peut supporter le roulage des véhicules. Selon les quantités de photoinitiateur et de peroxyde employées et les puissances d'irradiations utilisées, la vitesse d'application de la couche de peinture peut aller de 10 à 150 mètres par minute, soit de 0,6 à 9 km/h.

Dans le cas où l'on a également recours au sel métallique réducteur, on réalise le liant, contenant ou non le photoinitiateur, puis la peinture, sans les billes de verre.

On divise la peinture en deux parties. Dans la première partie, on dissout la quantité nécessaire de peroxyde et la quantité nécessaire de photoinitiateur si ce dernier n'a pas été introduit dans le liant. Dans la deuxième partie, on dissout la quantité nécessaire de sel métallique réducteur.

L'application de la peinture se fait encore par deux pulvérisations (pistolage) successives, la première consistant à réunir par deux jets convergents les deux parties réactives de la peinture, la seconde consistant à mettre en place les billes de verre.

Dès la première pulvérisation, les deux parties réactives de la peinture étant mélangées intimement, la polymérisation est amorcée. Dès la fin de la deuxième pulvérisation, la peinture est irradiée par le rayonnement ultraviolet, celui-ci provoquant, par l'intermédiaire du photoinitiateur, la polymérisation de la couche supérieure qui a été mal polymérisée lors de la réaction entre les deux parties réactives de la peinture du fait de l'effet inhibiteur de l'oxygène de l'air. Quelques secondes, c'est-à-dire 10 à 30 secondes au maximum, après la fin de l'irradiation ultraviolette, la peinture est totalement polymérisée et peut supporter le roulage des véhicules. Selon les quantités de photoinitiateur, de peroxyde et de sel métallique mises en oeuvre et la puissance du rayonnement ultraviolet, la vitesse de mise

en place de la couche de peinture constituant le marquage routier peut être de 10 à 150 m/mn soit de 0,6 à 9 km/h.

Les exemples suivants sont relatifs à des modes de réalisation avantageux.

Exemple 1

On prépare un liant de la composition suivante :

| | |
|---|---|
| - Résine époxy-acrylate du type de celle connue sous la marque Ebecryl 600 | 32 % en poids |
| - Acrylate de butyle | 33 % en poids |
| - Diacrylate de polyéthylène glycol | 33 % en poids |
| - Photoinitiateur constitué par des éthers de la benzoïne du type de celui connu sous la marque Vicure 30 | 2 % en poids |

La peinture présente la composition suivante :

| | |
|---|---|
| - liant | 46 % en poids |
| - Dioxyde de titane | 9 % en poids |
| - Charges diverses | 45 % en poids |

On ajoute alors 1 % en poids par rapport à la masse de la peinture de peroxyde de benzoyle. La peinture est pulvérisée en une couche d'une épaisseur d'environ 350µm, sur laquelle on pulvérise une quantité de billes de verre représentant environ 50 % en poids par rapport à la peinture.

On traite la couche ainsi formée à la vitesse de 30 m/mn à l'aide d'un irradiateur ultraviolet d'une puissance de 80 W/cm linéaire puis immédiatement après, toujours à la vitesse de 30 m/mn, à l'aide d'un irradiateur infrarouge d'une puissance de 50 W/cm linéaire. A la sortie de l'irradiateur infrarouge, la peinture est complètement sèche et est polymérisée à coeur. Les billes de verre ont une excellente adhérence dans la peinture.

Exemple 2

Les compositions du liant et de la peinture sont celles décrites dans l'exemple 1.

On ajoute par rapport à la peinture 1 % en poids de peroxyde de 2-4 dichlorobenzoyle.

Cette peinture est pulvérisée en une couche d'une épaisseur d'environ 350 μm et sur cette couche, on pulvérise des billes de verre (proportion identique à l'exemple 1).

On traite la couche formée à la vitesse de 12 m/mn à l'aide d'un irradiateur ultraviolet d'une puissance de 80 W/cm linéaire.

A la sortie de l'irradiateur ultraviolet, la peinture est complètement sèche et est polymérisée à coeur. Les billes de verre ont une excellente adhérence dans la peinture.

<u>Exemple 3</u>

On prépare une composition de liant comprenant en poids :

| | |
|---|---|
| - Résine époxy-acrylate du type de celle de la marque Ebécryl 600 | 32 % |
| - Acrylate de butyle | 32 % |
| - Diacrylate de polyéthylène glycol | 32 % |
| - Photoinitiateur de l'exemple 1 | 4 % |

La composition de la peinture est la même que celle décrite dans l'exemple 1.

On ajoute, par rapport à la peinture, 3 % en poids de peroxyde de 2-4-dichlorobenzoyle.

Cette peinture est pulvérisée en une couche d'une épaisseur d'environ 350 μm et sur la couche, on pulvérise des billes de verre (proportion identique à l'exemple 1).

On traite cette couche à la vitesse de 50 m/mn à l'aide d'un irradiateur ultraviolet d'une puissance de 80 W/cm linéaire, puis immédiatement après à l'aide d'un irradiateur infrarouge d'une puissance de 100 W/cm linéaire.

Après l'irradiation infrarouge, la peinture est complètement sèche et est polymérisée à coeur. Les billes de verre ont une excellente adhérence dans la peinture.

Exemple 4

Les compositions du liant et de la peinture sont celles décrites dans l'exemple 1.

La peinture réalisée est divisée en deux fractions identiques. Dans l'une des deux fractions, on ajoute 1 % en poids de peroxyde de 2-4-dichlorobenzoyle. Dans la deuxième fraction, on ajoute 1 % en poids, grâce à 2 % d'eau en poids par rapport au poids total de la peinture, de sulfate ferreux.

Ces deux fractions de peinture sont pulvérisées simultanément en quantités égales en une couche d'une épaisseur d'environ 350 µm, puis on pulvérise, immédiatement après sur cette couche de peinture des billes de verre (proportion identique à l'exemple 1).

Environ dix secondes après la fin de la deuxième pulvérisation, on traite celle couche peinture-billes à la vitesse de 40 m/mn à l'aide d'un irradiateur ultraviolet d'une puissance de 80 W/cm linéaire. A la sortie de cette irradiateur, la peinture est complètement sèche et est polymérisée à coeur. Les billes de verre ont une excellente adhérence dans la peinture.

Exemple 5

Les compositions du liant et de la peinture sont celles décrites dans l'exemple 1.

La peinture réalisée est divisée en deux fractions identiques. Dans l'une des deux fractiosns, on ajoute 1 % en poids de peroxyde de benzoyle. Dans la deuxième fraction, on ajoute 1 % en poids de sulfate ferreux grâce à 2 % d'eau en poids par rapport au poids total de la peinture.

Ces deux fractions sont pulvérisées simultanément en quantités égales en une couche d'une épaisseur d'environ 350 µm. On pulvérise immédiatement après sur cette couche de peinture des billes de verre (proportion identique à l'exemple 1).

Environ dix secondes après la fin de la deuxième pulvérisation, on traite cette couche de peinture à la vitesse de 40 m/mn à l'aide d'un irradiateur ultraviolet d'une puissance de 80 W/cm linéaire. A la sortie de cet irradiateur, la peinture est complètement sèche et est polymérisée à coeur. Les billes de verre ont une excellente adhérence dans la peinture.

Exemple 6

Les compositions du liant et de la peinture sont décrites dans l'exemple 1.

La peinture réalisée est divisée en deux fractions identiques. Dans l'une des deux fractions, on ajoute 1 % en poids de peroxyde de 2-4 dichlorobenzoyle. Dans la deuxième fraction, on ajoute 1 % en poids de chlorure stanneux grâce à 2 % d'eau en poids par rapport au poids total de la peinture.

Ces deux fractions sont pulvérisées simultanément en quantités égales en une couche de peinture d'environ 350 μm d'épaisseur, puis on pulvérise, immédiatement après, sur cette couche de peinture des billes de verre (proportion identique à l'exemple 1).

Environ dix secondes après la fin de la deuxième pulvérisation, on traite cette couche à une vitesse de 35 m/mn à l'aide d'un irradiateur ultraviolet d'une puissance de 80 W/cm linéaire. A la sortie de l'irradiateur, la peinture est complètement sèche et est polymérisée à coeur. Les billes de verre ont une excellente adhérence dans la peinture.

Exemple 7

On prépare un liant ayant la composition suivante, en poids :

| | |
|---|---|
| - Résine époxy-acrylate du type de celle qui est connue sous la marque Ebécryl 600 | 32 % |
| - Acrylate de butyle | 33 % |

- Diacrylate d'hexane diol 33 %
- Photoinitiateur de l'exemple 1 2 %

La composition de la peinture est la même que celle décrite dans l'exemple 1.

Cette peinture est divisée en deux fractions identiques. Dans l'une des deux fractions, on ajoute 1 % en poids de peroxyde de benzoyle. Dans la deuxième fraction, on ajoute 1 % en poids de sulfate ferreux grâce à 2 % d'eau en poids par rapport au poids total de la peinture.

Ces deux fractions sont pulvérisées simultanément en quantités égales en une couche d'une épaisseur d'environ 350 $\mu$ m. On pulvérise immédiatement après sur cette couche de peinture des billes de verre (proportion identique à l'exemple 1).

Environ dix secondes après la fin de la deuxième pulvérisation, on traite cette couche à la vitesse de 40 m/mn à l'aide d'un irradiateur ultraviolet d'une puissance de 80 W/cm linéaire. A la sortie de l'irradiateur, la peinture est complètement sèche et est polymérisée à coeur. Les billes de verre ont une excellente adhérence dans la peinture.

Exemple 8

On prépare un liant ayant la composition suivante, en poids :

- Résine acrylique insaturée commerciale (Ebécryl 600) 32 %
- Acrylate de butyle 33 %
- Diacrylate de polyéthylène glycol 33 %
- Photoinitiateur selon l'exemple 1 2 %

La composition de la peinture est la même que celle décrite dans l'exemple 1.

La peinture réalisée est divisée en deux fractions identiques. Dans l'une des deux fractions, on ajoute à cette fraction 3 % en poids de peroxyde de

benzoyle. Dans la deuxième fraction, on ajoute 3 % en poids de sulfate ferreux, grâce à 2 % d'eau en poids par rapport au poids total de la peinture.

Ces deux fractions sont pulvérisées simultanément en quantités égales en une couche de peinture d'environ 350 µm d'épaisseur, puis on pulvérise immédiatement sur cette couche de peinture des billes de verre (proportion identique à l'exemple 1).

Environ dix secondes après la fin de la deuxième pulvérisation, on traite cette couche à la vitesse de 40 m/mn à l'aide d'un irradiateur ultraviolet d'une puissance de 80 W /cm linéaire. A la sortie de l'irradiateur, la peinture est complètement sèche et est polymérisée à coeur. Les billes de verre ont une excellente adhérence dans la peinture.

Exemple 9

On prépare un liant ayant la composition suivante :

| | |
|---|---|
| - Résine époxy-acrylate du type de celle connue sous la marque Ebécryl 600 | 32 % |
| - Acrylate de butyle | 33 % |
| - Diacrylate de polyéthylène glycol | 33 % |
| - Photoinitiateur du type de celui connu sous la marque Trigonal 15 (mélange d'éthers de la benzoïne et autres produits | 2 % |

La peinture réalisée est divisée en deux fractions identiques. Dans l'une des fractions, on ajoute 1 % en poids de peroxyde de benzoyle. Dans la deuxième fraction, on ajoute 1 % en poids de sulfate ferreux grâce à 2 % d'eau en poids par rapport au poids total de la peinture.

Ces deux fractions sont pulvérisées simultanément en quantités égales en une couche d'une épaisseur d'environ 350 µm, puis on pulvérise immédiatement sur cette couche de peinture des billes de verre.(proprotion identique à l'exemple 1).

Environ dix secondes après la fin de la deuxième pulrévisation, on traite cette couche à la vitesse de 30 m/mn à l'aide d'un irradiateur ultraviolet d'une puissance de 80 W/cm linéaire. A la sortie de l'irradiateur, la peinture est complètement sèche et est polymérisée à coeur. Les billes de verre ont une excellente adhérence dans la peinture.

Exemple 10

Les compositions du liant et de la peinture sont identiques à celles décrites dans l'exemple 1.

La peinture réalisée est divisée en deux fractions identiques. Dans l'une des fractions on ajoute 1 % en poids de peroxyde de 2-4-dichlorobenzoyle. Dans la deuxième fraction, on ajoute 1 % en poids de sel de Mohr grâce à 2 % d'eau en poids par rapport au poids total de la peinture (on rappelle que le sel de Mohr est du sulfate double de fer et d'ammonium, de formule $FeSO_4 \cdot (NH_4)_2SO_4 \cdot 6H_2O$).

Ces deux fractions sont pulvérisées simultanément en quantités égales en une couche de peinture d'environ 350 µm d'épaisseur, puis on pulvérise immédiatement sur cette couche de peinture des billes de verre (proportion identique à l'exemple 1).

Environ dix secondes après la fin de la deuxième pulvérisation, on traite cette couche à la vitesse de 35 m/mn à l'aide d'un irradiateur ultraviolet d'une puissance de 80 W/cm linéaire. A la sortie de l'irradiateur, la peinture est complètement sèche et est polymérisée à coeur. Les billes de verre ont une excellente adhérence dans la peinture.

A la suite de quoi, et quel que soit le mode de réalisation adopté, on dispose ainsi d'un procédé de marquage routier dont les avantages par rapport à ceux qui existent déjà sont notamment :

- celui de conduire à un séchage quasi-instantané de la peinture déposée, permettant dès la fin de l'application la circulation automobile et n'entraînant donc pas d'immobilisation de route et tous les inconvénients en découlant ;

- celui d'une possibilité d'application et donc de séchage à grande vitesse sans perturbation de la circulation ;

- celui d'une grande facilité d'emploi ne nécessitant pas de matériel important et/ou complexe ;

- celui d'être pratiquement indépendant de la température ambiante ;

- celui de ne pas nécessiter l'utilisation de solvants générateurs de pollution.

Comme il va de soi, et comme il résulte d'ailleurs de ce qui précède, l'invention ne se limite nullement à ceux de ces modes de réalisation qui ont été plus particulièrement envisagés ; elle en embrasse au contraire toutes les variantes.

## REVENDICATIONS

1. Procédé de mise en peinture d'un substrat, caractérisé en ce que l'on applique sur ledit substrat une couche d'une peinture comportant un liant polymérisable contenant un photoinitiateur, à laquelle on ajoute au moment de l'application un peroxyde, et en ce que l'on soumet ensuite la couche de peinture ainsi appliquée à une irradiation au moyen de rayonnements ultraviolets.

2. Procédé selon la revendication 1, caractérisé en ce que l'on ajoute à ladite peinture un sel métallique réducteur au moment de l'application de la couche de peinture.

3. Procédé selon l'une quelconque des revendications 1 et 2, caractérisé en ce que l'on soumet ensuite la couche de peinture irradiée au moyen de rayonnements ultraviolets à une irradiation au moyen de rayonnements infrarouges.

4. Procédé selon l'une quelconque des revendications 1 à 3, caractérisé en ce que le liant polymérisable comprend :

- au moins un prépolymère réactif,
- au moins un monomère insaturé,
- au moins un monomère polyinsaturé, et
- au moins un photoinitiateur.

5. Procédé selon la revendication 4, caractérisé en ce que le liant comprend 15 à 50 % en poids de prépolymère réactif, 10 à 60 % en poids de monomères monoinsaturés, 5 à 50 % en poids de monomères polyinsaturés, et de 0,1 à 10 % en poids de photoinitiateur.

6. Procédé selon l'une quelconque des revendications 1 à 5, caractérisé en ce que le peroxyde est du peroxyde de benzoyle ou du peroxyde de 2-4-dichlorobenzoyle.

7. Procédé selon l'une quelconque des revendications 1 à 6, caractérisé en ce que le sel métallique est un sel de fer, d'étain ou de cérium.

8. Procédé selon la revendication 7, caractérisé en ce que le sel métallique est du sulfate ferreux, du chlorure stanneux ou du sulfate double de fer et d'ammonium.

9. Procédé selon l'une quelconque des revendications 1 à 8, caractérisé en ce que la quantité de peroxyde ajoutée est de 0,1 à 10 % en poids, de préférence de 1 à 5 % en poids, par rapport au liant.

10. Procédé selon l'une quelconque des revendications 1 à 9, caractérisé en ce que la quantité de sel métallique ajoutée est de 0,1 à 10 %, de préférence de 0,5 à 3 % en poids, par rapport au liant.

11. Application du procédé selon l'une quelconque des revendications 1 à 10 au marquage routier.